# EUROPEAN PATENT SPECIFICATION

(11) **EP 3 060 798 B1**
(45) Date of publication and mention of the grant of the patent: **21.02.2018**
(21) Application number: 14789157.6
(22) Date of filing: 20.10.2014
(51) Int. Cl.: F03D 15/00

(54) **A WIND TURBINE WITH A BELT DRIVE GEAR ARRANGEMENT**
WINDTURBINE MIT EINER RIEMENTRIEB-GETRIEBEANORDNUNG
ÉOLIENNE AVEC SYSTÈME D'ENGRENAGE D'ENTRAÎNEMENT DE COURROIE

(30) Priority: 22.10.2013 DK 201370606
(43) Date of publication of application: 31.08.2016
(73) Proprietor: Vestas Wind Systems A/S, 8200 Aarhus N (DK)
(72) Inventor: KUDSK, Henrik, DK-8462 Harlev (DK); NEUBAUER, Jesper Lykkegaard, DK-8543 Hornslet (DK); BAUN, Torben Ladegaard, DK-8541 Skødstrup (DK)
(74) Representative: Vestas Patents Department
(86) International application number: PCT/DK2014/050341
(87) International publication number: WO 2015/058770

(56) References cited:
- EP-A1- 2 060 783
- EP-A1- 2 525 090
- EP-A2- 2 391 825
- WO-A1-2012/164501
- US-A- 5 954 611

## Description

### FIELD OF THE INVENTION

The present invention relates to a wind turbine comprising a nacelle, a hub carrying one or more rotor blades, a generator and a belt drive gear arrangement arranged to transfer rotational movements of the hub to rotational movements of the generator.

### BACKGROUND OF THE INVENTION

Wind turbines are arranged to capture energy of the wind by means of one or more rotor blades, and to transfer this energy into electrical energy by means of a generator. In some wind turbines a drive train, including a gear arrangement, is provided for transferring rotational movements of a hub carrying the rotor blade(s) to rotational movements of the generator (see e.g. EP 2 525 090 A). The gear arrangement may comprise a number of intermeshed toothed gear wheels which provides an appropriate gearing between the rotational movements of the hub and the rotational movements of the generator shaft. As an alternative, the gear arrangement may comprise a number of pulleys being interconnected by means of a number of belts or chains, in order to transfer rotational movements between the pulleys.
One example of a wind turbine comprising a belt drive is disclosed in EP 2 391 825. The position of the drive device in EP 2 391 825 makes it difficult to perform maintenance to the drive device, in particular to replace the belts of the drive device, because it is not possible to insert new belts without disassembling at least part of the drive device, due to the connected elements in both axial directions from the large belt disks.

### DESCRI PTI ON OF THE I NVENTI ON

It is an object of embodiments of the invention to provide a wind turbine comprising a belt drive gear arrangement, which allow the belts of the gear arrangement to be more easily replaced.
It is a further object of embodiments of the invention to provide a wind turbine comprising a belt drive gear arrangement, which allow maintenance on the gear arrangement to be more easily performed.

The invention provides a wind turbine as defined in independent claim 1. The wind turbine according to the invention comprises a nacelle. The nacelle is typically a substantially closed housing mounted on top of a tower or pylon, in such a manner that the nacelle is capable of performing yawing movements relative to the tower or pylon. This allows the rotor blades of the wind turbine to be positioned in a desired direction, relative to the wind direction.
The wind turbine further comprises a hub carrying one or more rotor blades. The hub is mounted on the nacelle in a rotatable manner. Thereby, during operation of the wind turbine, the wind is caught by the rotor blade(s) in such a manner the energy of the wind is transformed into rotational movements of the hub.
A rotating shaft is arranged to be connected to a generator in order to transfer rotational movement to the generator. Thus, the rotating shaft operates as an input shaft to the generator, i.e. when the rotating shaft rotates, energy is transferred to the generator in the form of rotational movement.
Finally, the wind turbine comprises a gear arrangement arranged to transfer rotational movements of the hub to rotational movements of the rotating shaft. Accordingly, when the hub rotates due to the wind acting on the rotor blade(s), this rotational movement is transferred to the rotating shaft, and thereby to the generator, via the gear arrangement. The gear arrangement is preferably a speed increasing gear arrangement, i.e. the rotational speed of the rotating shaft is preferably higher than the rotational speed of the hub.

The gear arrangement comprises a number of pulleys and a number of belts interconnecting the pulleys. Rotational movements are transferred between the pulleys by means of the belts. Thus, the gear arrangement is in the form of a belt drive. This is an advantage, since the weight of a belt drive is typically significantly lower than the weight of a corresponding gear arrangement using intermeshing toothed gear wheels.
In the present context the term 'pulley' should be interpreted to mean any suitable member for the purpose known to a skilled person in the art, such as a relatively flat object, having a substantially circular shape.
The hub is arranged between the gear arrangement and the nacelle. Thus, the gear arrangement, the hub and the nacelle are arranged relative to each other in such a manner that, seen in a direction from the nacelle, the hub is first encountered, and subsequently the gear arrangement. Accordingly, the gear arrangement may be regarded as being arranged in front of the hub. Furthermore, the gear arrangement and the nacelle may be regarded as being positioned at opposing sides of the hub, along an axial direction. This allows the belts of the gear arrangement to be easily inspected and replaced, because they are readily accessible. On the contrary, the gear arrangement disclosed in EP 2 391 825, is arranged in the nacelle, thereby making it difficult, or even impossible, to replace the belts of the gear arrangement without dismantling either the generator or the hub. To this end it is noted that belts, contrary to chains, cannot be dissembled without breaking the belts. It is therefore necessary to be able to move the belts in a substantially axial direction in order to replace the belts. Accordingly, it is a great advantage of the present invention that the hub is arranged between the gear arrangement and the nacelle, as described above, because this arrangement allows the belts to be removed and positioned along a substantially axial direction. A yet further advantage of the present invention is that there is less need for shielding in the nacelle in that the belt drive is placed in the hub, where it is not possible to be while the turbine is running.

The gear arrangement comprises:
- a primary pulley being rotationally decoupled from the hub,
- two or more planetary pulleys, each planetary pulley being mounted on the hub, thereby rotating along with the hub, and each planetary pulley being provided with a planetary shaft, each planetary pulley being arranged to perform rotational movements about its planetary shaft, and
- a centre pulley being connected to the rotating shaft,
wherein at least one belt may interconnect the primary pulley to each of the planetary shafts, and at least one belt may interconnect each of the planetary pulleys to the centre pulley.

According to this embodiment, the pulleys of the gear arrangement are mounted in a planetary manner with a primary pulley, two or more planetary pulleys and a centre pulley. The primary pulley is rotationally decoupled from the hub, i.e. the primary pulley does not rotate along with the hub when the wind acts on the rotor blade(s). The primary pulley may be fixedly mounted relative to the nacelle, or it may be arranged to perform rotational movements relative to the nacelle, as long as these rotational movements are not following the rotational movements of the hub. Accordingly, when the hub rotates, a relative rotational movement occurs between the hub and the primary pulley.

Each of the planetary pulleys is mounted on the hub, i.e. the planetary pulleys rotate along with the hub when the hub rotates due to the wind acting on the rotor blade(s). Thereby a relative rotational movement between the primary pulley and the planetary pulleys is also provided, when the hub rotates.

Each of the planetary pulleys is further provided with a planetary shaft, and each planetary pulley is arranged to perform rotational movements about its planetary shaft. Thus, apart from rotating along with the hub, each planetary pulley is also capable of performing individual rotational movements about the corresponding planetary shaft.

The centre pulley is connected to the rotating shaft. Thereby rotational movements of the centre pulley are directly transferred to the rotating shaft.

At least one belt interconnects the primary pulley to each of the planetary shafts. Thereby the relative rotational movement between the primary pulley and the planetary pulleys drives rotational movements of each of the planetary pulleys about their respective planetary shafts, via the at least one belt. One belt may interconnect the primary pulley and a given planetary shaft. In this case the belts of the respective planetary shafts may be arranged side by side on the primary pulley. As an alternative, the primary pulley and a given planetary shaft may be interconnected by two or more belts, the belts being arranged side by side on the primary pulley, as well as on the planetary shaft.

Furthermore, at least one belt interconnects each of the planetary pulleys to the centre pulley. Thereby the rotational movements of the planetary pulleys, about their respective planetary shafts, drives a rotational movement of the centre pulley, and thereby of the rotating shaft, via the at least one belt. As described above, a single belt or two or more belts arranged side by side may be applied.

The wind turbine may further comprise a hollow king pin, wherein the primary pulley is mounted fixedly on the hollow king pin.

As earlier mentioned, the weight of a belt drive is typically significantly lower than the weight of a corresponding gear arrangement using intermeshing toothed gear wheels. Hereby it is possible to use a king pin solution of a relatively thin size as compared to e.g. the solution shown in EP 2 525 090, which does not really show a king pin solution but instead more or less a prolonged nacelle structure in order to carry the higher weight.

The hub may be rotationally mounted on the king pin via a main bearing arrangement. According to this embodiment, the hub rotates relative to the king pin. The king pin may advantageously extend through the hub and be fixedly mounted relative to the nacelle. The main bearing arrangement may comprise a single bearing, or it may comprise two or more bearings arranged along an axial direction defined by the king pin.

At least part of the rotating shaft may be arranged inside the hollow king pin. According to this embodiment, the rotating shaft may extend through the hollow king pin in order to interconnect the gear arrangement, arranged at one end of the king pin, and a generator arranged at an opposite end of the king pin. This allows a compact design of the wind turbine, and it further allows rotational movements to be transferred from the gear arrangement arranged in front of the hub to a generator, e.g. arranged in the nacelle behind the hub.

Thus, the wind turbine may further comprise a generator, which may be arranged inside the nacelle.

As an alternative, the wind turbine may further comprise one or more generators, wherein the generator(s) is/are arranged inside the hub or on the hub. According to this embodiment, a hollow king pin may not be required, because it is possible to transfer rotational movements directly from the gear arrangement, arranged in front of the hub, to the generator arranged inside the hub. Thus, there is no need for transferring the rotational movements through the hub. A single generator may be provided, e.g. connected to a centre pulley via a single rotating shaft. As an alternative, two or more generators may be provided. For instance, a generator may be connected to each of the planetary shafts, instead of connecting the planetary shafts to a centre pulley. Or generators may be mounted directly on the hub instead of planetary shafts.

At least part of the gear arrangement may be partly enclosed by the hub. According to this embodiment, a part of the hub extends in a direction towards the gear arrangement, in such a manner that it encloses a part of the gear arrangement. It should, however, be noted that the gear arrangement is still arranged in front of the hub in the sense that a part of the hub is arranged between the gear arrangement and the nacelle, i.e. that the gear arrangement and the nacelle are arranged at opposing sides of the hub, along an axial direction. The entire gear arrangement may be arranged inside such an extension of the hub. Alternatively, only part of the gear arrangement, for instance a primary pulley, may be arranged within the extension of the hub, while the remaining part of the gear arrangement, such as one or more planetary pulleys and a centre pulley, may be arranged outside the hub.

### BRIEF DESCRIPTION OF THE DRAWINGS

The invention will now be described in further detail with reference to the accompanying drawings in which
Figs. 1-4 are perspective views of a wind turbine according to an embodiment of the invention,
Fig. 5 is a cross sectional view of a wind turbine according to an embodiment of the invention, and
Fig. 6 is a front view of the gear arrangement of the wind turbine of Fig. 5.

### DETAILED DESCRIPTION OF THE DRAWINGS

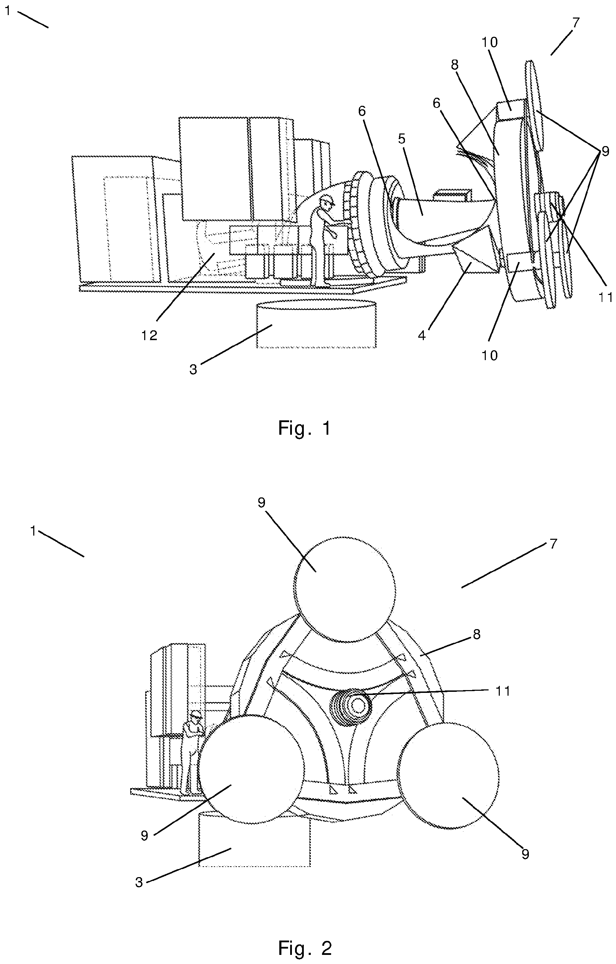

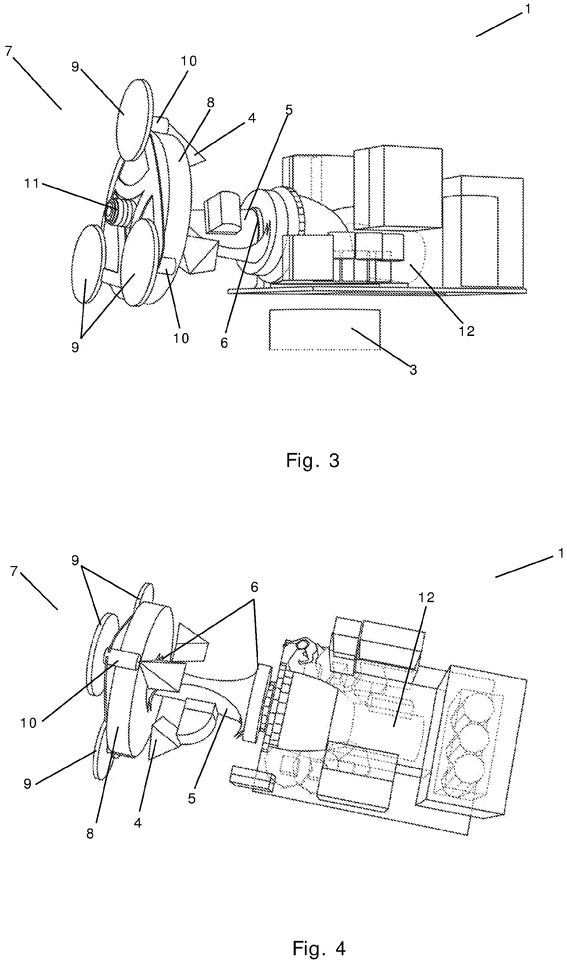

Figs. 1-4 are perspective views of a wind turbine 1 according to an embodiment of the invention. Figs. 1-4 show the wind turbine 1 from various angles, and some parts, such as a nacelle cover, a hub cover, a yaw arrangement and rotor blades, have been omitted in order to show elements arranged inside the nacelle and the hub.

The wind turbine comprises a nacelle (nacelle cover not shown) mounted on top of a tower 3. A hub 4, only part of which is shown, is mounted rotatably on the nacelle. Accordingly, wind acting on rotor blades (not shown), carried by the hub 4, causes the hub 4 to rotate relative to the nacelle about a substantially horizontal axis.

The hub 4 is mounted on a hollow king pin 5 via two bearings 6 constituting a main bearing arrangement. It is noted that even though the use of ball bearings is shown here, the use of other types of bearings are also within the scope of the invention, such as a slide bearing.

The wind turbine 1 further comprises a gear arrangement 7 mounted in front of the hub 4 in the sense that the hub 4 is arranged between the gear arrangement 7 and the nacelle. The gear arrangement 7 comprises a primary pulley 8, three planetary pulleys 9, each being provided with a planetary shaft 10, and a centre pulley 11. The centre pulley 11 is connected to a rotating shaft (not shown) which is arranged to transfer rotational movements from the centre pulley 11 to a generator 12 arranged inside the nacelle. The rotating shaft extends through the hollow king pin 5.

The primary pulley 8 is mounted fixedly on the hollow king pin 5, and the planetary pulleys 9 are mounted on the hub 4. Furthermore, the primary pulley 8 is connected to each of the planetary shafts 10 via one or more belts (not shown), and each of the planetary pulleys 9 is connected to the centre pulley 11 via one or more belts (not shown). Thus, when the hub 4 rotates, a relative rotational movement between the primary pulley 8 on the one hand, and the planetary pulleys 9 and the planetary shafts 10 on the other hand, is introduced. Due to the belt connection between the primary pulley 8 and the planetary pulleys 9 and shafts 10, this will cause each of the planetary shafts 10 to be rotated, and thereby each of the planetary pulleys 9 will perform a rotational movement about its planetary shaft 10.

Due to the belt connections between each of the planetary pulleys 9 and the centre pulley 11, the rotational movements of the planetary pulleys 9 described above will cause the centre pulley 11, and thereby the rotating shaft, to rotate. Accordingly, rotational movements are transferred from the hub 4 to the generator 12, via the gear arrangement 7 and the rotating shaft.

Since the gear arrangement 7 is arranged in front of the hub 4, i.e. the hub 4 is arranged between the gear arrangement 7 and the nacelle, the gear arrangement 7 is readily accessible. In particular, the belts of the gear arrangement 7 can easily be removed from the gear arrangement 7 by pulling them in a direction away from the hub 4. Thereby the belts can be replaced without having to disassemble the hub 4 or the generator 12.

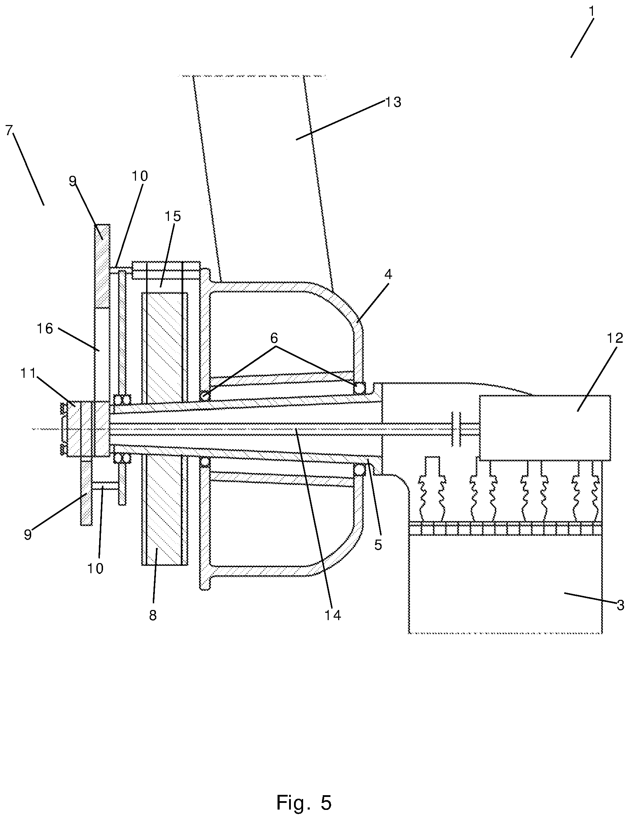

Fig. 5 is a cross sectional view of a wind turbine 1 according to an embodiment of the invention. The embodiment shown in Fig. 5 is very similar to the embodiment shown in Figs. 1-4, and it will therefore not be described in further detail here. In Fig. 5 one of the rotor blades 13 is shown. Furthermore, it can be seen that the king pin 5 is hollow, and that the rotating shaft 14 extends through the hollow king pin 5, interconnecting the centre pulley 11 and the generator 12.

A belt 15 encircles the primary pulley 8 and each of the planetary shafts 10, and three belts 16 each encircles one of the planetary pulleys 9 and the centre pulley 11.

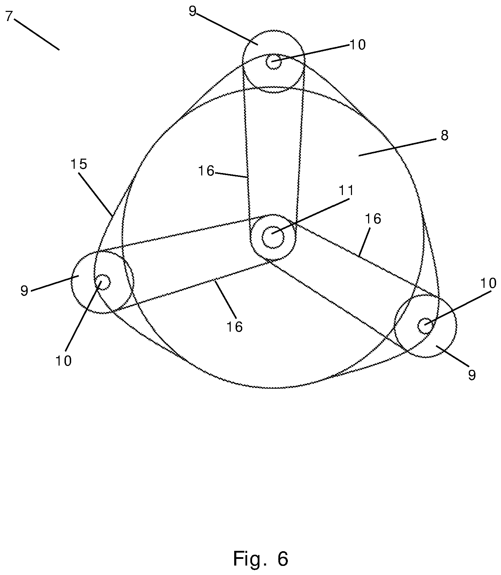

Fig. 6 is a front view of the gear arrangement 7 of the wind turbine 1 of Fig. 5. It can be seen how the belt 15 encircles the primary pulley 8 and each of the planetary shafts 10, and how the belts 16 each encircles one of the planetary pulleys 9 and the centre pulley 11.

## Claims

1. A wind turbine (1) comprising:
- a nacelle,
- a hub (4) carrying one or more rotor blades (13), the hub (4) being rotatably mounted on the nacelle,
- a rotating shaft (14) arranged to be connected to a generator (12) in order to transfer rotational movement to the generator (12), and
- a gear arrangement (7) arranged to transfer rotational movements of the hub (4) to rotational movements of the rotating shaft (14),
wherein the hub (4) is arranged between the gear arrangement (7) and the nacelle,
**characterized in that** the gear arrangement (7) comprising a number of pulleys (8, 9, 11) and a number of belts (15, 16) interconnecting the pulleys (8, 9, 11) in order to transfer rotational movements between the pulleys (8, 9, 11), thereby transferring rotational movements from the hub (4) to the rotating shaft (14), wherein the gear arrangement (7) comprises:
- a primary pulley (8) being rotationally decoupled from the hub (4),
- two or more planetary pulleys (9), each planetary pulley (9) being mounted on the hub (4), thereby rotating along with the hub (4), and each planetary pulley (9) being provided with a planetary shaft (10), each planetary pulley (9) being arranged to perform rotational movements about its planetary shaft (10), and
- a centre pulley (11) being connected to the rotating shaft (14),
wherein at least one belt (15) interconnects the primary pulley (8) to each of the planetary shafts (10), and at least one belt (16) interconnects each of the planetary pulleys (9) to the centre pulley (11).

2. A wind turbine (1) according to claim 1, further comprising a hollow king pin (5), wherein the primary pulley (8) is mounted fixedly on the hollow king pin (5).

3. A wind turbine (1) according to claim 2, wherein the hub (4) is rotationally mounted on the king pin (5) via a main bearing arrangement (6).

4. A wind turbine (1) according to claim 2 or 3, wherein at least part of the rotating shaft (14) is arranged inside the hollow king pin (5).

5. A wind turbine (1) according to claim 4, further comprising a generator (12), wherein the generator (12) is arranged inside the nacelle.

6. A wind turbine (1) according to any of claims 1-3, further comprising one or more generators (12), wherein the generator(s) (12) is/are arranged inside the hub (4).

7. A wind turbine (1) according to any of the preceding claims, wherein at least part of the gear arrangement (7) is partly enclosed by the hub (4).

## Patentansprüche

1. Windturbine (1), umfassend:
- eine Gondel,
- eine Nabe (4), die ein oder mehrere Rotorblätter (13) trägt, wobei die Nabe (4) drehbar an der Gondel montiert ist,
- eine Drehwelle (14), die angeordnet ist, um mit einem Generator (12) verbunden zu werden, um Drehbewegungen an den Generator (12) zu übertragen, und
- eine Getriebeanordnung (7), die angeordnet ist, um Drehbewegungen der Nabe (4) auf Drehbewegungen der Drehwelle (14) zu übertragen,
wobei die Nabe (4) zwischen der Getriebeanordnung (7) und der Gondel angeordnet ist, **dadurch gekennzeichnet, dass** die Getriebeanordnung (7) eine Anzahl von Riemenscheiben (8, 9, 11) umfasst, und eine Anzahl von Riemen (15, 16) die Riemenscheiben (8, 9, 11) mit einander verbinden, um Drehbewegungen zwischen den Riemenscheiben (8, 9, 11) zu übertragen und damit Drehbewegungen von der Nabe (4) an die Drehwelle (14) zu übertragen, wobei die Getriebeanordnung (7) umfasst:
- eine primäre Riemenscheibe (8), die von der Nabe (4) drehentkoppelt ist,
- zwei oder mehr Planetenriemenscheiben (9), wobei jede Planetenriemenscheibe (9) auf der Nabe (4) montiert ist, und sich daher mit der Nabe (4) dreht, und jede Planetenriemenscheibe (9) mit einer Planetenwelle (10) versehen ist, wobei jede Planetenriemenscheibe (9) angeordnet ist, um Drehbewegungen um ihre Planetenwelle (10) auszuführen, und
- eine Mittelriemenscheibe (11), die mit der Drehwelle (14) verbunden ist,
wobei mindestens ein Riemen (15) die primäre Riemenscheibe (8) mit jeder der Planetenwellen (10) verbindet, und mindestens ein Riemen (16) jede der Planetenriemenscheiben (9) mit der Mittelriemenscheibe (11) verbindet.

2. Windturbine (1) nach Anspruch 1, weiter umfassend einen hohlen Königszapfen (5), wobei die primäre Riemenscheibe (8) fest auf dem hohlen Königszapfen (5) montiert ist.

3. Windturbine (1) nach Anspruch 2, wobei die Nabe (4) über eine Hauptlageranordnung (6) drehbar auf dem Königszapfen (5) montiert ist.

4. Windturbine (1) nach Anspruch 2 oder 3, wobei mindestens Teil der Drehwelle (14) innerhalb des hohlen Königszapfens (5) angeordnet ist.

5. Windturbine (1) nach Anspruch 4, weiter umfassend einen Generator (12), wobei der Generator (12) innerhalb der Gondel angeordnet ist.

6. Windturbine (1) nach einem der Ansprüche 1-3, weiter umfassend einen oder mehrere Generatoren (12), wobei der/die Generator(en) (12) innerhalb der Nabe (4) angeordnet ist/sind.

7. Windturbine (1) nach einem der vorstehenden Ansprüche, wobei mindestens Teil der Getriebeanordnung (7) teilweise von der Nabe (4) umschlossen ist.

## Revendications

1. Eolienne (1) comprenant :
- une nacelle,
- un moyeu (4) portant une ou plusieurs pales de rotor (13), le moyeu (4) étant monté rotatif sur la nacelle,
- un arbre rotatif (14) agencé de façon à se raccorder à un générateur (12) afin de transmettre un mouvement de rotation au générateur (12), et
- un système d'engrenage (7) agencé de façon à transmettre des mouvements de rotation du moyeu (4) à des mouvements de rotation de l'arbre rotatif (14),
dans laquelle le moyeu (4) est agencé entre le système d'engrenage (7) et la nacelle,
**caractérisée en ce que** le système d'engrenage (7) comprend un certain nombre de poulies (8, 9, 11) et un certain nombre de courroies (15, 16) reliant les poulies (8, 9, 11) entre elles afin de transmettre des mouvements de rotation entre les poulies (8, 9, 11), transmettant ainsi des mouvements de rotation du moyeu (4) à l'arbre rotatif (14), dans laquelle le système d'engrenage (7) comprend :
- une poulie principale (8) étant découplée en rotation du moyeu (4),
- deux poulies planétaires (9) ou plus, chaque poulie planétaire (9) étant montée sur le moyeu (4), tournant ainsi conjointement avec le moyeu (4), et chaque poulie planétaire (9) étant pourvue d'un arbre planétaire (10), chaque poulie planétaire (9) étant agencée de façon à effectuer des mouvements de rotation autour de son arbre planétaire (10), et
- une poulie centrale (11) étant raccordée à l'arbre rotatif (14),
dans laquelle au moins une courroie (15) relie la poulie primaire (8) à chacun des arbres planétaires (10), et au moins une courroie (16) relie chacune des poulies planétaires (9) à la poulie centrale (11).

2. Eolienne (1) selon la revendication 1, comprenant en outre un pivot central creux (5), dans laquelle la poulie principale (8) est montée fixe sur le pivot central creux (5).

3. Eolienne (1) selon la revendication 2, dans laquelle le moyeu (4) est monté rotatif sur le pivot central (5) par l'intermédiaire d'un système de palier principal (6).

4. Eolienne (1) selon la revendication 2 ou 3, dans laquelle au moins une partie de l'arbre rotatif (14) est agencée à l'intérieur du pivot central creux (5).

5. Eolienne (1) selon la revendication 4, comprenant en outre un générateur (12), dans laquelle le générateur (12) est agencé à l'intérieur de la nacelle.

6. Eolienne (1) selon l'une quelconque des revendications 1 à 3, comprenant en outre un ou plusieurs générateurs (12), dans laquelle le(s) générateur(s) (12) est/sont agencé(s) à l'intérieur du moyeu (4).

7. Eolienne (1) selon l'une quelconque des revendications précédentes, dans laquelle au moins une partie du système d'engrenage (7) est partiellement entourée par le moyeu (4).
